(19)

Europäisches
Patentamt
European
Patent Office
Office européen
des brevets

(11) **EP 3 170 600 A1**

(12) **EUROPEAN PATENT APPLICATION**
published in accordance with Art. 153(4) EPC

(43) Date of publication:
**24.05.2017 Bulletin 2017/21**

(51) Int Cl.:
**B23D 45/02** *(2006.01)*     **B23D 45/10** *(2006.01)*
**B23D 45/18** *(2006.01)*

(21) Application number: **15822264.6**

(22) Date of filing: **17.07.2015**

(86) International application number:
**PCT/KR2015/007438**

(87) International publication number:
**WO 2016/010392 (21.01.2016 Gazette 2016/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **17.07.2014 KR 20140090195**

(71) Applicants:
• **POSCO**
  **Gyeongsangbuk-do 790-300 (KR)**
• **Sinjin SM Co., Ltd.**
  **Jeollabuk-do 597-841 (KR)**

(72) Inventors:
• **MOON, Chang-Ho**
  **Pohang-si**
  **Gyeongsangbuk-do 790-360 (KR)**
• **NAM, Hyun-Woong**
  **Pohang-si**
  **Gyeongsangbuk-do 790-360 (KR)**

• **CHOI, Kang-Hyouk**
  **Pohang-si**
  **Gyeongsangbuk-do 790-360 (KR)**
• **KIM, Bung-Jin**
  **Osan-si**
  **Gyeonggi-do 447-756 (KR)**
• **LEE, Mee-Hyun**
  **Suwon-si**
  **Gyeonggi-do 443-757 (KR)**
• **KIM, Hong-Ki**
  **Suwon-si**
  **Gyeonggi-do 443-380 (KR)**
• **LEE, Sung-Jin**
  **Pohang-si**
  **Gyeongsangbuk-do 790-360 (KR)**
• **CHUN, Myung-Sik**
  **Pohang-si**
  **Gyeongsangbuk-do 790-360 (KR)**

(74) Representative: **Zech, Stefan Markus**
  **Meissner Bolte Patentanwälte**
  **Rechtsanwälte Partnerschaft mbB**
  **Postfach 86 06 24**
  **81633 München (DE)**

(54) **CUTTING APPARATUS AND CUTTING METHOD**

(57)     The present invention provides a cutting apparatus comprising: a supply part for supplying an object to be cut; a first cutting part for cutting the object to be cut, provided from the supply part; a carrying part arranged to be consecutive to the first cutting part to carry an intermediate cut object, cut by the first cutting part; and a second cutting part arranged to be consecutive to the carrying part to receive and cut the intermediate cut object from the carrying part, wherein the first and second cutting parts comprise saw blade parts movably and rotatably configured to cut the object to be cut or the intermediate cut object, and the saw blade part has a rotary shaft formed on the upper side of the object to be cut or the intermediate cut object.

FIG. 1

# Description

[Technical Field]

The present disclosure relates to a cutting apparatus and a cutting method for cutting a material and, more particularly, to a cutting apparatus and a cutting method for cutting a large piece of material such as a slab to form a piece of material having a desired cross section, for example, a billet.

[Background Art]

When a metal plate according to the related art, particularly, a thick plate, is cut, a gas torch has commonly been used. When a metal plate is cut using a gas torch, an oxidation reaction with oxygen may occur through the metal plate being heated by the gas torch. Molten metal is generated in a part heated by oxidation reaction heat, and the molten metal flows downwardly due to gravity. Therefore, a gap between metal plate portions is generated, ultimately cutting a metal plate.

In this case, molten metal flowing downwardly is concentrated at a lower portion of a cut surface and a lower surface and an edge part of a metal plate to form burrs. Such burrs may inevitably be formed in the case of melt cutting. In addition, such a melting method is slow, and a cut surface may contain defects due to impurities (inclusions) inside a slab, while flatness may be defective due to thermal deformation. In detail, in the case that a thickness of a cutting object is relatively thick, a large amount of heat is required. Therefore, it is difficult to secure a rectangular cross section. In addition, when a slab is cut to form a billet, secondary processing of the formed billet may be required.

Thus, a mechanical cutting apparatus such as that disclosed in Patent Document 1 has been proposed. In Patent Document 1, a structure, in which a metal material having a circular or polygonal cross section is clamped to be mounted on a loading part, and subsequently, horizontal cutting is performed thereon using a circular saw, has been proposed. To this end, an electric motor for generating power, a box type power transmission device installed above a lower frame installed on a floor of a building to reduce the number of revolutions per minute of an electric motor, a circular saw for cutting a material while fixed to an output shaft of the power transmission device to rotate at high speed, and the like are included therein. In this case, a cutting material is located in a position parallel to an axis of rotation of a circular saw.

In the case of Patent Document 1, high speed cutting of a metal material having a small circular or polygonal cross section in a cross sectional direction may be performed. However, since a direction of a cutting load applied to the circular saw (cutting resistance acting in a gravity direction) is the same as a transfer direction of the power transmission device having a relatively heavy weight (a direction opposed to gravity), a large hydraulic cylinder is required, and thus, a size of a cutter becomes large. In addition, performance of smooth upward and downward linear movement may be difficult due to the weight, or a quality of a cut surface may be degraded, due to vibrations of a saw blade.
(Patent document 1) Korea Patent Laid-Open Publication No. 2011-0035458

[Disclosure]

[Technical Problem]

An aspect of the present disclosure may provide a cutting apparatus for cutting a cutting object a plurality of times, and generating a cut object having a desired cross section.

An aspect of the present disclosure may provide a cutting apparatus and a cutting method for cutting a slab into a billet having a length the same as that of the slab.

An aspect of the present disclosure may provide a cutting apparatus and a cutting method, in which cutters having different cutting speeds cut materials continuously.

[Technical Solution]

To achieve the objective described above, a cutting apparatus and a cutting method are provided.

According to an aspect of the present disclosure, a cutting apparatus includes: a supply part for supplying a cutting object; a first cutting part for cutting the cutting object provided by the supply part; a transfer part disposed beyond the first cutting part to transfer an intermediate cut object cut in the first cutting part; and a second cutting part disposed beyond the transfer part to receive the intermediate cut object provided by the transfer part to be cut. The first cutting part and the second cutting part include a saw blade member configured to be moved and rotated to cut the cutting object or the intermediate cut object, and the saw blade member includes a rotary shaft located above the cutting object or the intermediate cut object.

The transfer part may include a rotating part for receiving the intermediate cut object to be rotated to be positioned to be perpendicular to a transfer direction, and a surface cut by the first cutting part and a surface cut by the second cutting part may intersect each other when viewed with respect to the cutting object.

The first cutting part and the second cutting part may cut the cutting object in a direction perpendicular to the transfer direction.

The first cutting part and the second cutting part may include a prop member in which the cutting object or the intermediate cut object is located on an upper surface, a frame part supported on an upper surface of the prop member, and the saw blade member moved along the frame part. The saw blade member may be configured to rotate a saw blade in a front end in a moving direction downwardly during cutting movement.

The first cutting part and the second cutting part may include a spacing part installed rearwardly in a moving direction of the saw blade member during cutting movement, and for spacing a gap between cut surfaces by a predetermined distance after the saw blade member passes.

The first cutting part and the second cutting part may further include a fixing part for pressurizing the cutting object or the intermediate cut object in a direction of the prop member to be fixed thereto.

The transfer part may include a rotating part for rotating an intermediate transferred object and a buffer part for storing the intermediate transferred object, and the rotating part and the buffer part may be sequentially disposed in a transfer direction of the intermediate cut object.

The rotating part may include a support member for supporting at least a lateral surface and a lower surface of the intermediate cut object, and a driving part connected to the support member to move and rotate the support member.

The support member may include a plurality of support plates disposed in a direction perpendicular to the transfer direction of the intermediate cut object, and the driving part may include a first driving part for moving the support member in a transfer direction of the intermediate transferred object, and a second driving part for rotating the support member around an axis disposed perpendicularly to a transfer direction.

According to another aspect of the present disclosure, a cutting apparatus includes: a supply part for supplying a cutting object; a first cutting part for cutting the cutting object provided by the supply part; and a second cutting part disposed beyond the first cutting part to receive an intermediate cut object provided by the first cutting part to be cut. A surface cut by the first cutting part and a surface cut by the second cutting part intersect each other.

A transfer part disposed beyond the first cutting part to transfer the intermediate cut object cut in the first cutting part may be further included, and the transfer part may include a rotating part for receiving the intermediate cut object to be rotated to be positioned to be perpendicular to a transfer direction.

The first cutting part and the second cutting part may include a saw blade member configured to be moved and rotated to cut the cutting object or the intermediate cut object, and the saw blade member may include a rotary shaft located above the cutting object or the intermediate cut object.

The first cutting part may be located in a position higher than that of the second cutting part, and a height difference between the first cutting part and the second cutting part may be greater than a length in a transfer direction of the intermediate cut object cut by at least the first cutting part.

The transfer part may include a rotation transfer part for rotating an intermediate transferred object and a buffer part for storing the intermediate transferred object, and the intermediate transferred object may be stacked to be disposed in at least one of the buffer part and the rotation transfer part.

The rotation transfer part and the buffer part may be sequentially disposed, and the buffer part may be configured to have a supply surface disposed in the same level as that of a position in which a material of the second cutting part is disposed.

The support plate of the support member may be configured to have an L-shape, the support member may include a bar for integrally connecting the support plate, the bar may be connected to the first driving part and the second driving part, and the bar may be connected to a guide part for guiding movement in a transfer direction due to the first driving part.

The guide part may include a pinion connected to an end of the bar to be rotated by a bearing device, and a rack extended in a transfer direction to be formed in a position corresponding to that of the pinion.

The supply part may include: a loading bed located downwardly of the cutting object and having a concave and convex configuration; a plurality of support rolls disposed in a convex portion of the loading bed and disposed at regular intervals in a width direction and a transfer direction of the cutting object; and a pushing device disposed in a concave portion of the loading bed and for pushing the cutting object toward the first cutting part.

In the support roll, a distance between support rolls in the transfer direction may gradually narrow toward the first cutting part. On a bottom surface of the concave portion, a sliding guide may be configured in a transfer direction, and the pushing device may be configured to be moved along the sliding guide.

According to another aspect of the present disclosure, a cutting method includes: a supplying step of supplying a cutting object; a first cutting step of cutting the cutting object at regular intervals in a transfer direction; a rotating step of rotating an intermediate cut object cut in the first cutting step to be positioned to be perpendicular to a transfer direction; and a second cutting step of cutting the intermediate cut object rotated at regular intervals in a transfer direction.

In the rotating step, the intermediate cut object may be rotated 90 degrees to be positioned to be perpendicular to a transfer direction.

The rotating step may include: a first moving step of receiving the intermediate cut object passing through the first cutting step to be moved by a predetermined distance; an intermediate rotating step of rotating the intermediate cut object; and a second moving step of supplying the intermediate cut object rotated to a second cutting step.

In the second moving step, a plurality of intermediate cut objects may be pushed in a transfer direction while lateral surfaces of the intermediate cut object surface-contact each other, to move the plurality of intermediate cut objects simultaneously.

The cutting method may further include a stacking step of stacking the intermediate cut object rotated as a plurality of layers after the intermediate rotating step. In the second cutting step, the plurality of intermediate cut objects, which are stacked, may be cut at the same time.

In the cutting method, the cutting object may be a slab whose cross section is a rectangle, and, in the second cutting step, the intermediate cut object may be cut to a billet whose cross section is a rectangle smaller than that of the slab.

[Advantageous Effects]

According to an exemplary embodiment in the present disclosure, a cutting apparatus and a cutting method, capable of cutting a cutting object a plurality of times to manufacture a cut object having a desired cross section, may be provided. In detail, a cut object having a cut surface with a good shape may be quickly provided using mechanical cutting, and a defect may be less to improve yield.

According to an exemplary embodiment in the present disclosure, a cutting apparatus and a cutting method, capable of cutting a slab to a billet having the same length as that of the slab, may be provided. In addition, a plurality of billets may be continuously manufactured from a slab to significantly improve productivity of a billet.

According to an exemplary embodiment in the present disclosure, a cutting apparatus and a cutting method, allowing for continuous cutting by cutters having different cutting speeds, may be provided.

[Description of Drawings]

FIG. 1 is a perspective view of a cutting apparatus according to an exemplary embodiment in the present disclosure.

FIG. 2 is a perspective view of a supply part of a cutting apparatus according to an exemplary embodiment in the present disclosure.

FIG. 3 is a schematic view of a first cutting part of a cutting apparatus according to an exemplary embodiment in the present disclosure.

FIG. 4 is a perspective view of a rotating part of a transfer part of a cutting apparatus according to an exemplary embodiment in the present disclosure.

FIGS. 5A to 5D are views when a rotating part of a transfer part of a cutting apparatus according to an exemplary embodiment in the present disclosure, is operating.

FIG. 6 is a perspective view of a buffer part of a transfer part of a cutting apparatus according to an exemplary embodiment in the present disclosure.

FIGS. 7A to 7E are views when a buffer part of a transfer part of a cutting apparatus according to an exemplary embodiment in the present disclosure, is operating.

FIG. 8 is a side view of a buffer part of a cutting apparatus according to an exemplary embodiment in the present disclosure.

FIG. 9 is a schematic view of a second cutting part of a cutting apparatus according to an exemplary embodiment in the present disclosure.

FIG. 10 is a schematic view of a cutting method according to an exemplary embodiment in the present disclosure.

FIG. 11 is a flow chart of a cutting method according to an exemplary embodiment in the present disclosure.

FIG. 12 is a schematic view of a cutting method according to another exemplary embodiment in the present disclosure.

FIG. 13 is a flow chart of a cutting method according to another exemplary embodiment in the present disclosure.

FIG. 14 is a schematic view of a cutting method according to the other exemplary embodiment in the present disclosure.

FIG. 15 is a flow chart of a cutting method according to the other exemplary embodiment in the present disclosure.

[Best Mode for Invention]

Hereinafter, exemplary embodiments of the present disclosure will be described in detail with reference to the accompanying drawings. The present disclosure may be variously modified by referring to exemplary embodiments of the accompanying drawings.

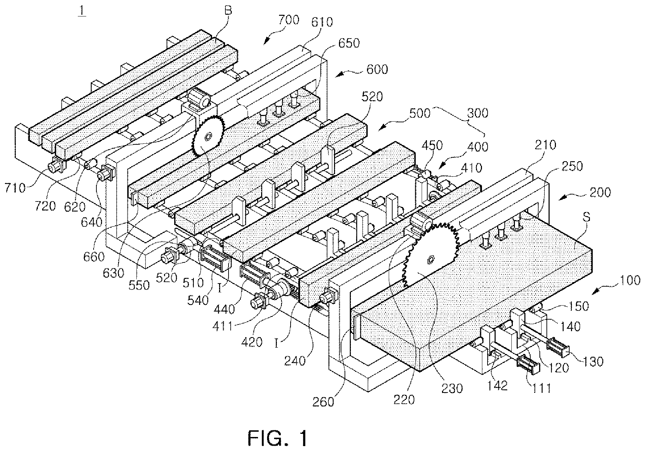

FIG. 1 is a perspective view illustrating an exemplary embodiment of a cutting apparatus 1 in the present disclosure. As shown in FIG. 1, the cutting apparatus 1 in the present disclosure may include a supply part 100 for supplying a cutting object S, for example, a slab, a first cutting part 200 for cutting the cutting object S provided by the supply part 100, a transfer part 300 disposed beyond the first cutting part 200 to transfer an intermediate cut object I cut in the first cutting part 200, a second cutting part 600 disposed beyond the transfer part 300 to receive the intermediate cut object I provided by the transfer part 300 to be cut, and a discharge part 700 for transferring and discharging a cut object B cut in the second cutting part 600. The supply part 100, the first cutting part 200, the transfer part 300, the second cutting part 600, the discharge part 700 may be sequentially disposed in a transfer direction of the cutting object S.

The first cutting part 200 and the second cutting part 600 may include saw blade members 230 and 630 configured to be moved and rotated to cut the cutting object S or the intermediate cut object I, and the saw blade members 230 and 630 include rotary shafts located above the cutting object S or the intermediate cut object I.

The supply part 100 may include a pushing bar 140 abutting on the cutting object S to supply the cutting object S to the first cutting part 200 and a pushing device 130 connected thereto, and the pushing device 130 may be installed in a concave portion 111 of a loading bed 110 in a concave and convex configuration. Meanwhile, a support roll 150 maybe formed in a convex portion of the loading bed 110 to support the cutting object S. Thus, the cutting object S may be moved to the first cutting part 200 through the pushing device 130 while supported on the support roll 150.

The first cutting part 200 and the second cutting part 600 have basic configurations similar to each other in an exemplary embodiment. The first cutting part 200 and the second cutting part 600 may include prop members including rolls and disposed below the cutting object S, frame parts 210 and 610 supported on upper surfaces of the prop members, and the saw blade members 230 and 630 moved along the frame parts 210 and 610. The saw blade members 230 and 630 may be connected to first driving parts 220 and 620 to be rotated, and connected to second driving parts 240 and 640 to be moved back and forth in a direction perpendicular to a transfer direction of the cutting object S. The first driving parts 220 and 620 allow saw blades in front ends in a moving direction during cutting movement of the saw blade members 230 and 630, to be rotated downwards.

A fixing part 250 for pressurizing the cutting object S near the saw blade members 230 and 630 in a transfer direction of the cutting object S to be fixed may be disposed forwards in a moving direction of the saw blade members 230 and 630. The fixing part 250 may pressurize the cutting object S in a direction of a prop member to prevent the cutting object S from moving/vibrating.

Meanwhile, in an external frame of the first cutting part 200 and the second cutting part 600, a spacing part, in which an end is fixed to allow cross sections, cut as the saw blade members 230 and 630 pass therethrough, to be spaced from each other, and for pushing a wedge part to a cut surface of the cutting object S, may be disposed therein.

The first cutting part 200 may cut the cutting object S at regular intervals in a direction perpendicular to a transfer direction. In this case, a cutting interval may correspond to a length of a cross section of the cut object B. In addition, the second cutting part 600 may also cut the intermediate cut object I at regular intervals in a direction perpendicular to a transfer direction of an intermediate cut object. In this case, a cutting interval may correspond to a width of a cross section of the cut object B. Thus, when a billet having a square cross section is formed, the first cutting part 200 and the second cutting part 600 may perform cutting at equal intervals.

The transfer part 300 including a rotating part 400 for rotating the intermediate cut object I to be positioned to be perpendicular to a transfer direction may be disposed between the first cutting part 200 and the second cutting part 600.

The rotating part 400 may include a support member 430 for supporting at least a lateral surface and a lower surface of the intermediate cut object I passing through the first cutting part 200, and a driving part connected to the support member 430 to move and rotate the support member 430. The rotating part 400 may allow the intermediate cut object I to be rotated so as to allow a cut surface cut by the first cutting part 200 and a cut surface cut by the second cutting part 600 to intersect each other when viewed with respect to the cutting object S. In other words, the first cutting part 200 may determine a length of a cross section of the cut object B, and the second cutting part 600 may determine a width of a cross section of the cut object B.

The transfer part 300 may include a buffer part 500 following the rotating part 400. The buffer part 500 may have a space, in which a plurality of intermediate cut objects I may be placed, to prevent the intermediate cut object I from not being supplied or from being accumulated due to a difference between cutting speeds of the first cutting part 200 and the second cutting part 600. The buffer part 500 may include a plate for moving a plurality of intermediate cut objects simultaneously and a driving part 540 connected thereto.

The intermediate cut object I passing through the transfer part 300 may be cut by the second cutting part 600 once more. A configuration of the second cutting part 600 may be similar to that of the first cutting part 200. However, since the second cutting part cuts an intermediate cut object I having a thickness thinner than that of a cutting object cut by the first cutting part 200 in an exemplary embodiment, a diameter of the saw blade member 630 of the second cutting part 600 is smaller than a diameter of the saw blade member 230 of the first cutting part 200.

The cut object B cut through the second cutting part 600 may be discharged by the discharge part 700. A transfer part for additional cutting may be disposed in a position of the discharge part 700, and the discharge part 700 is disposed in rear ends of the first cutting part 200 and the second cutting part 600 in an exemplary embodiment.

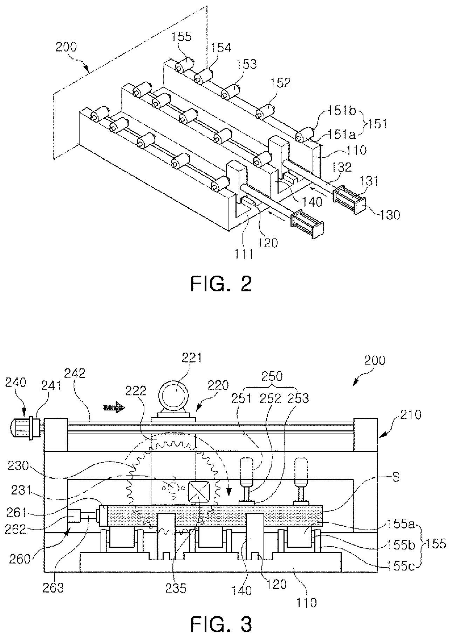

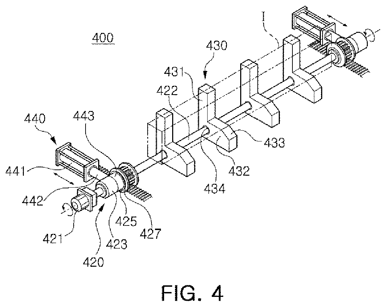

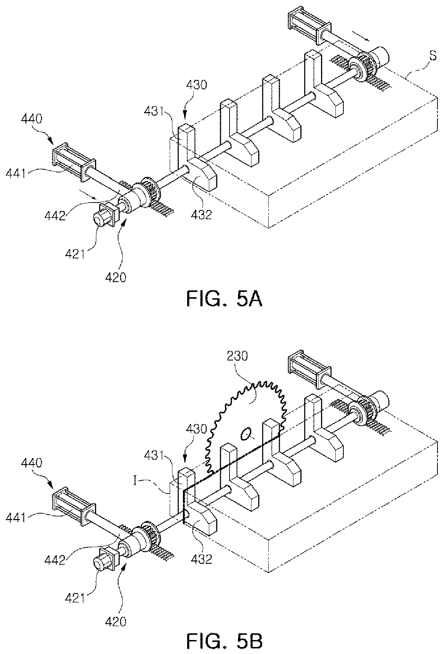

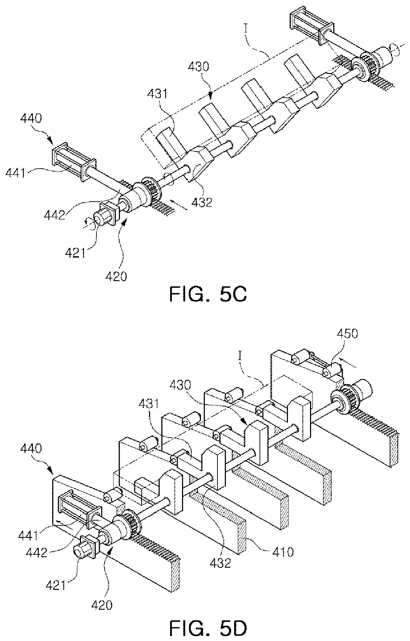

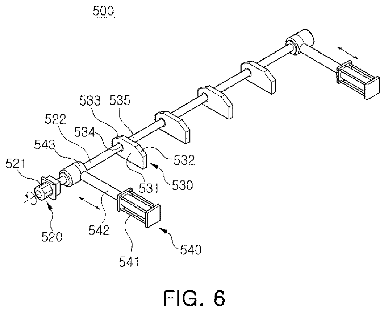

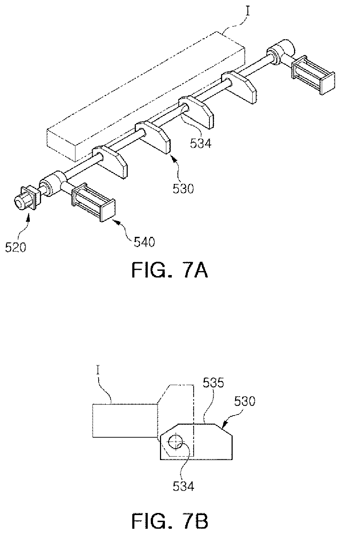

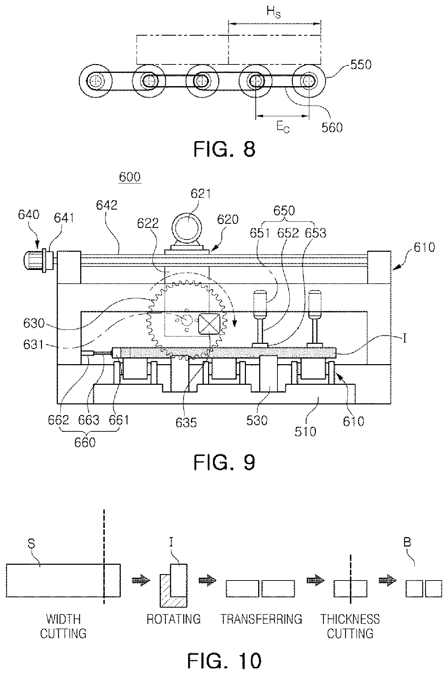

With reference to FIGS. 2 to 9, a configuration of the cutting apparatus 1 according to an exemplary embodiment in the present disclosure will be described in more detail. FIG. 2 is a perspective view illustrating the supply part 100 of the cutting apparatus 1 according to an exemplary embodiment in the present disclosure, FIG. 3 is a schematic view illustrating the first cutting part 200 of the cutting apparatus 1 according to an exemplary embodiment in the present disclosure, FIG. 4 is a perspective view illustrating the rotating part 400 of the transfer part 300 of the cutting apparatus 1 according to an exemplary embodiment in the present disclosure, FIGS. 5A to 5D are views illustrating the rotating part 400, which is operating, of the transfer part 300 of the cutting apparatus 1 according to an exemplary embodiment in the present disclosure, FIG. 6 is a perspective view illustrating the buffer part 500 of the transfer part 300 of the cutting apparatus 1 according to an exemplary embodiment in the present disclosure, FIGS. 7A to 7E are views illustrating the buffer part 500, which is operating, of the transfer part 300 of the cutting apparatus 1 according to an exemplary embodiment in the present disclosure, FIG. 8 is a side view illustrating the buffer part 500 of the cutting apparatus 1 according to an exemplary embodiment in the present disclosure, and FIG. 9 is a schematic view illustrating the second cutting part 600 of the cutting apparatus 1 according to an exemplary embodiment in the present disclosure.

As shown in FIG. 2, in the supply part 100 of the cutting apparatus 1 according to an exemplary embodiment in the present disclosure, in order to apply uniform supporting force while a cutting object S such as a heavy slab is moved and in order to prevent a defect caused by friction from occurring in a surface of a cutting object, support rolls 150 to 156 simply rotating by friction with a lower surface of a slab without a separate driving device are intermittently disposed in a width direction of a cutting object. The support roll 150 is supported by a rotary shaft 151a fixed to an upper part of the loading bed 110 in a concave and convex configuration in a longitudinal direction of the cutting object S. In this case, the number of convex portions of the concave and convex configuration of the loading bed 110 may be at least two, within a minimum length of the cutting object S to be cut.

In addition, as primary cutting with respect to a single cutting object S is performed, a width of the cutting object is gradually decreased. In order to prevent a narrow cutting object S from falling between support rolls 151 to 155 while the narrow cutting object is loaded to the first cutting part 200, center distances between support rolls 150 to 156 located in the same row of the loading bed 110 may become shorter toward the first cutting part 200.

In addition, the supply part 100 may include a pushing device 130 using a pushing bar 140 moving above a sliding guide 120 disposed between concave-convex portions of the loading bed 110, and a hydraulic cylinder 131, in order to move the cutting object S as much as a cutting dimension (a length $H_b$ of a cross section of a cut object to be manufactured) while a longitudinal direction of the cutting object S is always parallel to a cutting direction (an advancing direction of a circular saw center). The pushing device may push the cutting object S to the first cutting part 200 while a cylinder rod 132 is connected to the pushing bar 140 and the cylinder rod 132 is moved along with the pushing bar 140. In an exemplary embodiment, the sliding guide 120 and the pushing bar 140 are used, but an additional lubricant supply device and an LM guide structure may be included therein for slippery movement without a noise.

As shown in FIGS. 3 and 9, the first cutting part 200 and the second cutting part 600 have the same structure as described above. Reference to configurations of the first cutting part 200 and the second cutting part 600 is made to Korean Patent Application No. 2013-0111619 of the present applicant.

The circular saw blade members 230 and 630 for allowing a saw blade, in a front end in a moving direction during cutting movement, to perform a rotary cutting motion downwardly near an upper part of the cutting object S or the intermediate cut object I in order to easily discharge a chip generated during cutting, to prevent a material from flying during cutting, and reducing a cutting load; a vibration damping device 235 disposed parallel to the saw blade members 230 and 630 to prevent a saw from vibrating due to a cutting load, and to cool a cut surface of a material and a saw blade at the same time; a first driving part 220 having a deceleration device for transmitting power from rotation motors 221 and 621 for rotation of the saw blade members 230 and 630, and in close contact with frames 210 and 610 to support the saw blade members 230 and 630; and a rotary bar 242 to transfer rotation of the second driving part 240 to allow the first driving part 220 to be moved horizontally, so as to horizontally move the first driving part 220 at high speed in a cutting direction, may be included.

In addition, a spacing part 260 including a hydraulic cylinder 261 for preventing the saw blade members 230 and 630 from being inserted into cut surfaces during cutting, a cylinder rod 262, and a wedge-shaped metal plate 263 connected thereto, may be included.

Meanwhile, while a bottom surface of the cutting object S is supported using a pressurization plate 253 whose vertical position is fixed in order to fix movement of the cutting object S during cutting, the fixing part 250 in a circular or plate-shaped form including a plurality of hydraulic cylinders 251, a cylinder rod 252, and the pressurization plate 253 to vertically press an upper part of the cutting object S may be included.

The transfer part 300 located in the opposite side of the supply part 100 in the first cutting part 200 may include the rotating part 400 for rotating an intermediate cut object I, which is cut after the cutting object S is width cut, 90 degrees in a direction perpendicular to a transfer direction, in other words, in a longitudinal direction of the intermediate cut object I as an axis of rotation, and the buffer part 500 for sequentially moving the intermediate cut object I by a transferring device while a plurality of intermediate cut objects I are located between the first cutting part 200 and the second cutting part 600, so as to allow the first cutting part 200 and the second cutting part 600 to cut a material without rest.

The rotating part 400 may include the first driving part 420 and the second driving part 440 for transferring the intermediate cut object I and rotating the intermediate cut object I 90 degrees. The rotating part 400 may include a bed 410, the second driving part 440 located on the bed 410 and connected to the support member 430 to move the support member 430 in a transfer direction, a bar 422 connected to the second driving part 440 to be extended in a longitudinal direction of the intermediate cut object I, the support member 430 including a support plate connected to the bar 422, and the first driving part 420 connected to an end of the bar to rotate the bar 422 so as to rotate the support member 430.

The bar 422 may include a connected part 443 connected to the second driving part 440, and a guide part for guiding the support member 430 not to be rotated due to movement of the second driving part 440 may be connected thereto. The guide part may include a bearing 425, a pinion gear 427 connected thereto, and the bed 410, and a rack, on which the pinion gear 427 is mounted, installed on the bed 410. However, the guide part may have a different structure.

The support member 430 may include a support plate in which a plurality of intermediate cut objects I are disposed in a longitudinal direction, and the support plate may include a lateral surface supporting surface 431 for supporting a lateral surface in a transfer direction of the intermediate cut object I and a lower surface supporting surface 432 for supporting a lower surface, to have a substantially L-shape. A through hole 434, through which the bar 422 passes, may be formed in an intersection of the lateral surface supporting surface 431 and the lower surface supporting surface 432. In addition, the support plate may include an inclined surface 433 formed in an end of the lower surface supporting surface 432 to prevent interference with the intermediate cut object I or the saw blade member 230 from occurring when the support plate is rotated.

As continuously illustrated in FIGS. 5A to 5D, the rotating part 400 may perform reciprocating linear motion and rotational motion for transfer and for 90 degree rotation of the intermediate cut object I. While the support member 430 is in contact with an end of the cutting object S, the first cutting part 200 cuts the cutting object. Through the first driving part 420 and the second driving part 440, the intermediate cut object I which is cut may be rotated and transferred at the same time, or may be rotated after being transferred, or may be transferred after being rotated. In an exemplary embodiment of the present disclosure, a position of a lower surface of a material in the first cutting part 200 may be higher than a position of a lower surface of a material in the second cutting part 600. As shown in FIG. 5D, after the intermediate cut object is rotated, the intermediate cut object I is placed on a support roll 450 to be slid down by gravity, whereby transfer between the rotating part and the buffer part may be achieved without a special transferring device. In addition, as a difference in a height between them is greater than a length in a transfer direction of the intermediate cut object cut by the first cutting part 200, the intermediate cut object I may be stacked.

The buffer part 500 may include a space in which a plurality of intermediate cut objects I are disposed and a support member 530 moved in the space. The support member 530 may include a support plate 531 provided as a plurality of support plates disposed in a longitudinal direction of the intermediate cut object I, a bar 522 for connecting the support plate 531, a second driving part 520 connected to an end of the bar 522 to rotate the bar 522, and a first driving part 540 connected to an end of the bar 522 to move the bar 522 in a transfer direction.

In the support plate 531, both ends of an upper surface are formed of inclined surfaces 532 and 533 to prevent interference with the intermediate cut object I, and a flat supporting surface 535 is formed between the inclined surfaces 532 and 533. The supporting surface 535 may be in contact with the intermediate cut object I due to rotation of the bar 522, and the first driving part 540 is operated while the supporting surface is in contact with the intermediate cut object, to push the intermediate cut object I, in detail, a plurality of intermediate cut objects I simultaneously.

In an exemplary embodiment, the supporting surface 535 having a length corresponding to a thickness of a single layer is illustrated, as a single layer intermediate cut object I without stacking is pushed. However, when a plurality of intermediate cut objects I are pushed, a length of the supporting surface 535 may be longer.

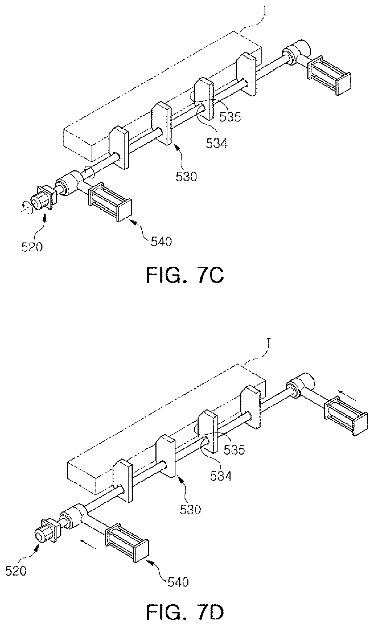

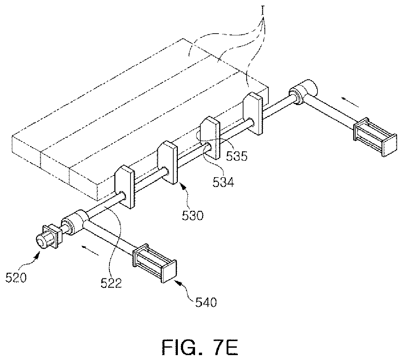

As illustrated in FIG. 7, while the support plate 531 is moved by a first driving part and a second driving part downwardly of the intermediate cut object I and rotated due to operation of the second driving part 520 rearwards the intermediate cut object I, the supporting surface 535 is in contact with a rear lateral surface of the intermediate cut object I. Thereafter, the intermediate cut object I is moved with a driving force of the first driving part 540. After movement is completed, the support plate returns to a state in FIG. 7A again, and waits for a next intermediate cut object I.

FIG. 8 is a side view illustrating the buffer part 500, which is an exemplary embodiment of moving an intermediate cut object I by not a support member 530 but a different driving device. The intermediate cut object I may be moved not by moving the support member 530, but by rotating a support roll 550 by a driving device (not shown) as the support roll 550 for supporting the intermediate cut object I is connected to the driving device by a chain 560. In a manner different therefrom, movement of the intermediate cut object I may be achieved by a different driving device. In this case, a distance (Ec) between centers of support rolls 550 is shorter than a width Hs of the intermediate cut object I, which may prevent the intermediate cut object I from being falling down into a gap between the support rolls 550.

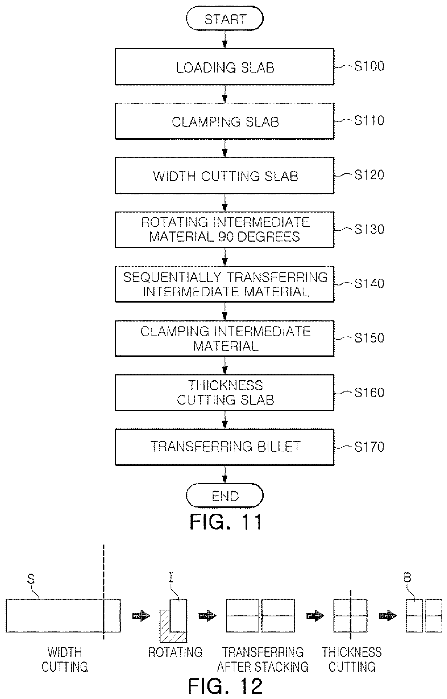

FIGS. 10 and 11 illustrate a cutting method according to an exemplary embodiment in the present disclosure. As shown in FIG. 10, width cutting with respect to a cutting object S is performed. After an intermediate cut object is rotated 90 degrees by a device such as the rotating part 400, the intermediate cut object is transferred to be cut. Through a cutting method described above, a slab having a large rectangular cross section may be cut to a billet having a rectangular cross section having the same length as that of the slab, but smaller than that of the slab.

As illustrated in FIG. 11, a slab is loaded (S100), the slab is clamped by a fixing device such as a fixing part 250 (S110), the slab is width cut by a cutting apparatus such as a saw blade member 230 (S120), the slab turned into an intermediate material is rotated (S130), the intermediate material is sequentially transferred (S140), the intermediate material is clamped (S150) and then cut by an additional cutting apparatus such as a second cutting part 600 (S160). Through width cutting a slab (S120) and thickness cutting a slab (S160), a slab having a large rectangular cross section may be processed to a billet having a rectangular or square cross section smaller than that of the slab. When lengths ($L_b$, $L_s$) of a billet and a slab are the same ($L_b = L_s$), the number of billets $N_s$ to be continuously manufactured from a single slab may be determined by the following equation, and a plurality of billets may be continuously manufactured from a single slab.

$$N_n = 2 \ (W_s + t) / (H_b + t)$$

Here, $W_s$ is a width of a slab, $H_b$ is a length of a cross section of a rectangular billet, and t is a thickness of a saw blade of a saw blade member.

Alternatively, when a length of a billet is the same as a width of a slab ($L_b = W_s$), the number of billets $N_s$ to be continuously manufactured from a single slab may be determined by the following equation.

$$N_s = 2 \ (L_s + t) / (H_b + t)$$

According to an exemplary embodiment in the present disclosure, a case, in which a length of a cross section of a billet is 1/2 of a thickness of a slab, is assumed to be described for convenience of explanation, but an exemplary embodiment is not limited thereto and variously modified. In addition, lengths of billets to be manufactured may be different.

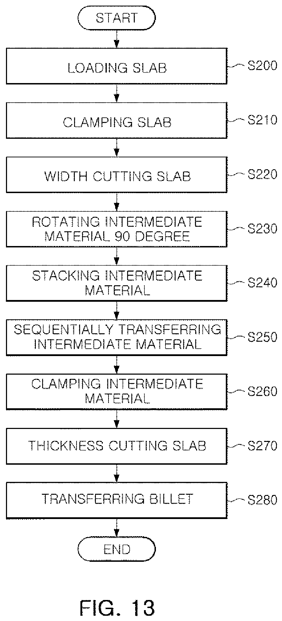

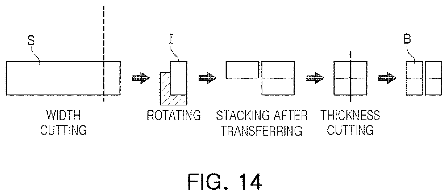

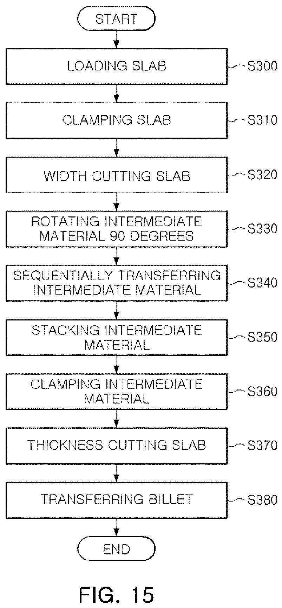

FIGS. 12 and 13 illustrate another cutting method, and FIGS. 14 and 15 illustrate the other cutting method.

In the case of FIGS. 12 and 13, the beginning is the same as the case of FIGS. 10 and 11, but it differs in that, in the middle, rotating (S230) and then stacking (S240), transferring (S250) thereafter, and clamping (S260) and thickness cutting a slab (S270) are performed while stacked. As described above, since cutting is performed while stacked, four billets may be manufactured at the same time in the second cutting part 600. In this case, stacking with a height difference between the first cutting part 200 and the second cutting part 600 is advantageous in that stacking without an additional configuration may be performed. However, the height difference therebetween is not necessarily required. In case of need, a configuration, in which an intermediate material is raised to be stacked, may be included.

In the case of FIGS. 14 and 15, the beginning is the same as the case of FIGS. 12 and 13 until rotating (S330), but it differs in terms of not immediately stacking but stacking (S350) after transferring a rotated intermediate material (S340) and before clamping (S360).

While exemplary embodiments with respect to a cutting apparatus and a cutting method have been shown and described above, it will be apparent to those skilled in the art that modifications and variations could be made without departing from the scope of the present invention as defined by the appended claims.

**Claims**

1. A cutting apparatus comprising:

   a supply part for supplying a cutting object;
   a first cutting part for cutting the cutting object provided by the supply part;
   a transfer part disposed beyond the first cutting part to transfer an intermediate cut object cut in the first cutting part; and
   a second cutting part disposed beyond the transfer part to receive the intermediate cut object provided by the transfer part to be cut,
   wherein the first cutting part and the second cutting part include a saw blade member configured to be moved and rotated to cut the cutting object or the intermediate cut object, and
   the saw blade member includes a rotary shaft located above the cutting object or the intermediate cut object.

2. The cutting apparatus of claim 1, wherein the transfer part includes a rotating part for receiving the intermediate cut object to be rotated to be positioned to be perpendicular to a transfer direction, and a surface cut by the first cutting part and a surface cut by the second cutting part intersect each other when viewed with respect to the cutting object.

3. The cutting apparatus of claim 2, wherein the first cutting part and the second cutting part cut the cutting object in a direction perpendicular to the transfer direction.

4. The cutting apparatus of claim 3, wherein the first cutting part and the second cutting part include a prop member in which the cutting object or the intermediate cut object is located on an upper surface, a frame part supported on an upper surface of the prop member, and the saw blade member moved along the frame part.

5. The cutting apparatus of claim 4, wherein the saw blade member is configured to rotate a saw blade in a front end in a moving direction downwardly during cutting movement.

6. The cutting apparatus of claim 4, wherein the first cutting part and the second cutting part include a spacing part installed rearwardly in a moving direction of the saw blade member during cutting movement, and for spacing a gap between cut surfaces by a predetermined distance after the saw blade member passes.

7. The cutting apparatus of claim 5, wherein the first cutting part and the second cutting part further include a fixing part for pressurizing the cutting object or the intermediate cut object in a direction of the prop member to be fixed thereto.

8. The cutting apparatus of claim 2, wherein the transfer part includes a rotating part for rotating an intermediate transferred object and a buffer part for storing the intermediate transferred object.

9. The cutting apparatus of claim 8, wherein the rotating part and the buffer part are sequentially disposed in a transfer direction of the intermediate cut object.

10. The cutting apparatus of claim 8, wherein the rotating part includes a support member for supporting at least a lateral surface and a lower surface of the intermediate cut object, and a driving part connected to the support member to move and rotate the support member.

11. The cutting apparatus of claim 10, wherein the support member includes a plurality of support plates disposed in a direction perpendicular to the transfer direction of the intermediate cut object, and the driving part includes a first driving part for moving the support member in a transfer direction of the intermediate transferred object, and a second driving part for rotating the support member around an axis disposed perpendicularly to a transfer direction.

12. A cutting apparatus comprising:

a supply part for supplying a cutting object;
a first cutting part for cutting the cutting object provided by the supply part; and
a second cutting part disposed beyond the first cutting part to receive an intermediate cut object provided by the first cutting part to be cut,
wherein a surface cut by the first cutting part and a surface cut by the second cutting part intersect each other.

13. The cutting apparatus of claim 12, further comprising:

a transfer part disposed beyond the first cutting part to transfer the intermediate cut object cut in the first cutting part,
wherein the transfer part includes a rotating part for receiving the intermediate cut object to be rotated to be positioned to be perpendicular to a transfer direction.

14. The cutting apparatus of claim 12, wherein the first cutting part and the second cutting part include a saw blade member configured to be moved and rotated to cut the cutting object or the intermediate cut object, and
the saw blade member includes a rotary shaft located above the cutting object or the intermediate cut object.

15. The cutting apparatus of claim 3 or claim 14, wherein the first cutting part is located in a position higher than that of the second cutting part,
a height difference between the first cutting part and the second cutting part is greater than a length in a transfer direction of the intermediate cut object cut by at least the first cutting part.

16. The cutting apparatus of claim 15, wherein the transfer part includes a rotation transfer part for rotating an intermediate transferred object and a buffer part for storing the intermediate transferred object, and
the intermediate transferred object is stacked to be disposed in at least one of the buffer part and the rotation transfer part.

17. The cutting apparatus of claim 16, wherein the rotation transfer part and the buffer part are sequentially disposed, and
the buffer part is configured to have a supply surface disposed in the same level as that of a position in which a material of the second cutting part is disposed.

18. The cutting apparatus of claim 11, wherein the support plate is configured to have an L-shape,
the support member includes a bar for integrally connecting the support plate,
the bar is connected to the first driving part and the second driving part, and
the bar is connected to a guide part for guiding movement in a transfer direction due to the first driving part.

19. The cutting apparatus of claim 18, wherein the guide part includes a pinion connected to an end of the bar to be rotated by a bearing device, and a rack extended in a transfer direction to be formed in a position corresponding to that of the pinion.

**20.** The cutting apparatus of claim 1 or claim 12, wherein the supply part includes: a loading bed located downwardly of the cutting object and having a concave and convex configuration; a plurality of support rolls disposed in a convex portion of the loading bed and disposed at regular intervals in a width direction and a transfer direction of the cutting object; and a pushing device disposed in a concave portion of the loading bed and for pushing the cutting object toward the first cutting part.

**21.** The cutting apparatus of claim 20, wherein, in the support roll, a distance between support rolls in the transfer direction gradually narrows toward the first cutting part.

**22.** The cutting apparatus of claim 20, wherein, on a bottom surface of the concave portion, a sliding guide is configured in a transfer direction, and the pushing device is configured to be moved along the sliding guide.

**23.** A cutting method comprising:

a supplying step of supplying a cutting object;
a first cutting step of cutting the cutting object at regular intervals in a transfer direction;
a rotating step of rotating an intermediate cut object cut in the first cutting step to be positioned to be perpendicular to a transfer direction; and
a second cutting step of cutting the intermediate cut object rotated at regular intervals in a transfer direction.

**24.** The cutting method of claim 23, wherein, in the rotating step, the intermediate cut object is rotated 90 degrees to be positioned to be perpendicular to a transfer direction.

**25.** The cutting method of claim 23, wherein the rotating step includes:

a first moving step of receiving the intermediate cut object passing through the first cutting step to be moved by a predetermined distance;
an intermediate rotating step of rotating the intermediate cut object; and
a second moving step of supplying the intermediate cut object rotated to a second cutting step.

**26.** The cutting method of claim 25, wherein, in the second moving step, a plurality of intermediate cut objects are pushed in a transfer direction while lateral surfaces of intermediate cut objects surface-contact each other, to move the plurality of intermediate cut objects simultaneously.

**27.** The cutting method of claim 25, further comprising a stacking step of stacking the intermediate cut object rotated as a plurality of layers after the intermediate rotating step.

**28.** The cutting method of claim 27, wherein, in the second cutting step, the plurality of intermediate cut objects, which are stacked, are cut at the same time.

**29.** The cutting method of one of claim 23 to claim 28, wherein the cutting object is a slab whose cross section is a rectangle, and, in the second cutting step, the intermediate cut object is cut to a billet whose cross section is a rectangle smaller than that of the slab.

FIG. 1

FIG. 2

FIG. 3

FIG. 4

FIG. 5A

FIG. 5B

FIG. 5C

FIG. 5D

500

533 535
522
534
543
521
532
531 530

520 542 541 540

FIG. 6

FIG. 7A

FIG. 7B

535

534

530

520

540

FIG. 7C

535

534

530

520

540

FIG. 7D

FIG. 7E

$H_S$

550

$E_C$

560

## FIG. 8

600

640 641 642 622 621 620 650 651 652 653

610

630
631

I

662 663 661 635 530 510 610
660

## FIG. 9

S

I

B

WIDTH
CUTTING

ROTATING

TRANSFERRING

THICKNESS
CUTTING

## FIG. 10

START

LOADING SLAB — S100

CLAMPING SLAB — S110

WIDTH CUTTING SLAB — S120

ROTATING INTERMEDIATE
MATERIAL 90 DEGREES — S130

SEQUENTIALLY TRANSFERRING
INTERMEDIATE MATERIAL — S140

CLAMPING INTERMEDIATE
MATERIAL — S150

THICKNESS
CUTTING SLAB — S160

TRANSFERRING BILLET — S170

END

FIG. 11

S

WIDTH
CUTTING

ROTATING

TRANSFERRING
AFTER STACKING

THICKNESS
CUTTING

B

FIG. 12

START

LOADING SLAB — S200

CLAMPING SLAB — S210

WIDTH CUTTING SLAB — S220

ROTATING INTERMEDIATE MATERIAL 90 DEGREE — S230

STACKING INTERMEDIATE MATERIAL — S240

SEQUENTIALLY TRANSFERRING INTERMEDIATE MATERIAL — S250

CLAMPING INTERMEDIATE MATERIAL — S260

THICKNESS CUTTING SLAB — S270

TRANSFERRING BILLET — S280

END

FIG. 13

S

I

B

WIDTH
CUTTING

ROTATING

STACKING AFTER
TRANSFERRING

THICKNESS
CUTTING

FIG. 14

START

LOADING SLAB — S300

CLAMPING SLAB — S310

WIDTH CUTTING SLAB — S320

ROTATING INTERMEDIATE
MATERIAL 90 DEGREES — S330

SEQUENTIALLY TRANSFERRING
INTERMEDIATE MATERIAL — S340

STACKING INTERMEDIATE
MATERIAL — S350

CLAMPING INTERMEDIATE
MATERIAL — S360

THICKNESS CUTTING SLAB — S370

TRANSFERRING BILLET — S380

END

FIG. 15

## INTERNATIONAL SEARCH REPORT

| International application No. |
| --- |
| **PCT/KR2015/007438** |

| A. | CLASSIFICATION OF SUBJECT MATTER |
| --- | --- |

***B23D 45/02(2006.01)i, B23D 45/10(2006.01)i, B23D 45/18(2006.01)i***

According to International Patent Classification (IPC) or to both national classification and IPC

| B. | FIELDS SEARCHED |
| --- | --- |

Minimum documentation searched (classification system followed by classification symbols)
B23D 45/02; B23D 45/20; B23D 45/10; B23D 55/04; B23D 55/02; B23D 45/04; B23D 47/00; B23D 45/18

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: cut(cut), saw(saw), feed(feed), rotate(rotate), metal(metal)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 20-0424634 Y1 (DELTA MACHINE CO., LTD.) 25 August 2006 See paragraphs [0050]-[0068], claim 1 and figures 2-4. | 1,12,14,15,20-22 |
| A | | 2-11,13,16-19 ,23-29 |
| Y | KR 10-2010-0120848 A (PARK, Jae Won) 17 November 2010 See paragraphs [0015]-[0026] and figure 1. | 1,12,14,15,20-22 |
| A | | 2-11,13,16-19 ,23-29 |
| A | KR 20-2011-0006429 U (DELTA MACHINE CO., LTD.) 24 June 2011 See paragraphs [0032]-[0044] and figure 1. | 1-29 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 OCTOBER 2015 (19.10.2015) | **19 OCTOBER 2015 (19.10.2015)** |

| Name and mailing address of the ISA/**KR** | Authorized officer |
| --- | --- |
| Korean Intellectual Property Office Government Complex-Daejeon, 189 Seonsa-ro, Daejeon 302-701, Republic of Korea | |
| Facsimile No.  82-42-472-7140 | Telephone No. |

Form PCT/ISA/210 (second sheet) (July 2009)

INTERNATIONAL SEARCH REPORT
Information on patent family members

International application No.

**PCT/KR2015/007438**

| Patent document cited in search report | Publication date | Patent family member | Publication date |
|---|---|---|---|
| KR 20-0424634 Y1 | 25/08/2006 | NONE | |
| KR 10-2010-0120848 A | 17/11/2010 | NONE | |
| KR 20-2011-0006429 U | 24/06/2011 | NONE | |

Form PCT/ISA/210 (patent family annex) (July 2009)

**EP 3 170 600 A1**

**Patent documents cited in the description**

- KR 20110035458
- KR 20130111619